# EUROPEAN PATENT SPECIFICATION

(11) **EP 3 811 784 B1**
(45) Date of publication and mention of the grant of the patent: **01.05.2024**
(21) Application number: 19806578.1
(22) Date of filing: 16.05.2019
(51) Int. Cl.: A23L 2/46, A23L 2/395, A23L 2/52, A23L 3/00, A23L 3/18, A23L 3/22, B08B 9/032, B01F 23/53

(54) **PREPARATION STERILIZATION DEVICE FOR PARTICLE-CONTAINING LIQUID BEVERAGE**
ZUBEREITUNGSSTERILISIERUNGSVORRICHTUNG FÜR PARTIKELHALTIGES FLÜSSIGES GETRÄNK
DISPOSITIF DE STÉRILISATION DE PRÉPARATION DE BOISSON LIQUIDE CONTENANT DES PARTICULES

(30) Priority: 21.05.2018 CN 201810487116
(43) Date of publication of application: 28.04.2021
(73) Proprietor: Jiangsu Newamstar Packaging Machinery Co., Ltd, Suzhou, Jiangsu 215618 (CN)
(72) Inventor: MAO, Jiahui, Suzhou, Jiangsu 215618 (CN); YANG, Yajun, Suzhou, Jiangsu 215618 (CN)
(74) Representative: Murgitroyd & Company
(86) International application number: PCT/CN2019/087158
(87) International publication number: WO 2019/223592

(56) References cited:
- EP-A1- 1 111 999
- EP-A1- 2 612 714
- EP-A1- 3 120 940
- CA-A1- 2 202 418
- CN-A- 101 480 265
- CN-A- 101 480 267
- CN-A- 105 767 182
- CN-A- 107 381 475
- CN-A- 108 100 979
- CN-A- 108 669 404
- CN-U- 205 305 907
- CN-U- 208 783 710
- CN-U- 208 909 060

## Description

### Technical Field of the Invention

The present invention relates to a preparation and sterilization device for a granule-containing liquid beverage.

### Background of the Invention

At present, granule-containing beverages have begun to rise in the domestic and Southeast Asian markets, for example, coconut milk beverages containing nata de coco granules, fruit juice beverages containing pulp granules, cereal beverages containing cereal granules, and the like, and these granule-containing liquid products are rich in nutrients, and become more and more favored by customers.

However, in the preparation process of granule-containing liquid beverages, an expensive granule flow meter is required, with a relatively high production cost. Meanwhile, in the process of sterilization of the granules, due to the center temperature of the granules is difficult to reach the standard, the complete sterilization of the granules cannot be ensured. Finally, when there is a problem with the back-end filling equipment, due to that the UHT cannot shutdown or the system is going to repeat the CIP/SIP processes, which greatly increases production cost and time, and in order to ensure the sterile conditions in the equipment, the granule-containing beverages need to be cyclically sterilized in the equipment, and in the sterilization process, the excessive and repeated sterilization of the granular products will cause breakage to the granular products due to the particularity of being easy to broken of the granules, greatly reducing the taste of the beverages.
CA2202418A1 discloses a system for supplying edible solids in the nature of hydrated hydrocolloids to a bottle filling station to form a suspension with a drinkable liquid composition. The collected solids are transported to the bottle filling station either directly by a metering device or in the form of a suspension with a drinkable liquid composition.
CN105767182A discloses a continuous production process and devices of milk drink containing cereal grains. The devices include an aseptic tank, a heat exchange sterilization conveying pipeline, and a grain adding device. The devices are characterized in that: the grain adding device includes a plurality of precooking tanks, mixing tanks and quantitative putting mechanisms. Cereals are put into the precooking tanks, water washing, draining, precooking, and cooling are carried out, the precooked cereal grains are continuously and quantitatively added into the mixing tanks through the quantitative putting mechanisms from the precooking tanks, at the same time, milk or drink is injected into the mixing tanks to be stirred and mixed together, then the mixture is subjected to heat sterilization, the sterilized mixture is cooled, the cooled mixture is injected into the aseptic tank to be stored and stirred, and finally the finished products are obtained by filling.
EP2612714A1 discloses a cleaning method for on-site cleaning of filling equipment that fills beverages, etc. into containers, liquid treatment equipment for filling solutions, and pipe equipment for connecting said equipment. In the cleaning method for on-site cleaning of the liquid pathways of equipment such as filling equipment (4) for filling beverages into bottles, cans and other containers, liquid-treatment equipment (3) for filling solutions, or pipe equipment (4p) that connects said equipment, liquid comprising nanobubbles is pumped into said equipment and is left undisturbed to soak for a prescribed period.

### Summary of the Invention

The present invention is aimed at providing a preparation and sterilization device for a granule-containing liquid beverage, which reduces the preparation cost of the granule-containing liquid beverage and capable of effectively ensuring the complete sterilization of the granules; and once the back-end filling equipment fails, the pure water in the pure water container will directly replace the granule-containing liquid beverage in the system, and push the granule-containing liquid beverage of the system into a storage container at the same time, it utilizes the pure water to replace the granule-containing liquid beverage to get cyclically sterilized, which ensures the sterile conditions of the system and meanwhile avoids the breakage problem of the granule-containing liquid beverage due to the excessive and repeated sterilization.

To achieve the above purpose, the technical solution employed by the present invention is a preparation and sterilization device for a granule-containing liquid beverage as defined in claim 1.

Preferably, the heating mechanism comprises a preheating heat exchange pipe and a preheating thermal insulation pipe successively communicating with each other; the sterilization mechanism comprises a sterilization heat exchange pipe and a sterilization thermal insulation pipe successively communicating with each other; and the cooling mechanism comprises a cooling heat exchange pipe and an outlet cooling pipe successively communicating with each other.

More preferably, the device further comprises a heat exchange mechanism, the heat exchange mechanism comprises a hot water container, a hot water outlet pipeline communicating with the hot water container, and a steam heat exchange pipe, and the hot water outlet pipeline successively passes through the cooling heat exchange pipe, the steam heat exchange pipe, and the sterilization heat exchange pipe, and then is divided into two parts to pass through the preheating heat exchange pipe and enter the hot water container, respectively.

More further preferably, the heat exchange mechanism further comprises a first temperature sensor disposed at an outlet end of the sterilization heat exchange pipe, and a first controller for controlling a steam flow entering the steam heat exchange pipe, the first temperature sensor is used to send a first temperature signal to the first controller, and the first controller is used to control the steam flow according to the first temperature signal.

More further preferably, the heat exchange mechanism further comprises a second temperature sensor disposed at an outlet end of the preheating heat exchange pipe, and a second controller for controlling a hot water flow entering the hot water container, the second temperature sensor is used to send a second temperature signal to the second controller, and the second controller is used to control the hot water flow according to the second temperature signal.

More further preferably, the heat exchange mechanism further comprises a cooling water pipeline for exchanging heat with the outlet cooling pipe.

Preferably, a discharge valve is provided between the second switch valve and the pure water container, and the discharge valve communicates with a recycle valve.

Preferably, a water overhead valve is provided between the first switch valve and the pure water container.

A preparation method of a granule-containing liquid beverage, the method being outside the subject-matter of the claims, comprises, in a batching container, defining a liquid level when the liquid medium reaches a set volume as a set liquid level, first introducing liquid into the batching container, wherein the volume of the introduced liquid is calculated according to a volume ratio of the liquid to granules in the granule-containing liquid beverage and the set volume, measuring an introduced amount of the liquid into the batching container by a flow meter, and then continuing to introduce granules into the batching container until the liquid level in the batching container rises to the set liquid level.

Due to the use of the above technical solution, the present invention has the following advantages over the prior art:
the preparation and sterilization device for a granule-containing liquid beverage of the present invention, reduces the preparation cost of the granule-containing liquid beverage and capable of effectively ensuring the complete sterilization of the granules; once the back-end filling equipment fails, the pure water in the pure water container will directly replace the granule-containing liquid beverage in the system, and push the granule-containing liquid beverage of the system into a storage container at the same time, it utilizes the pure water to replace the granule-containing liquid beverage to get cyclically sterilized, which ensures the sterile conditions of the system and meanwhile avoids the breakage problem of the granule-containing liquid beverage due to the excessive and repeated sterilization.

### Brief Description of the Drawings

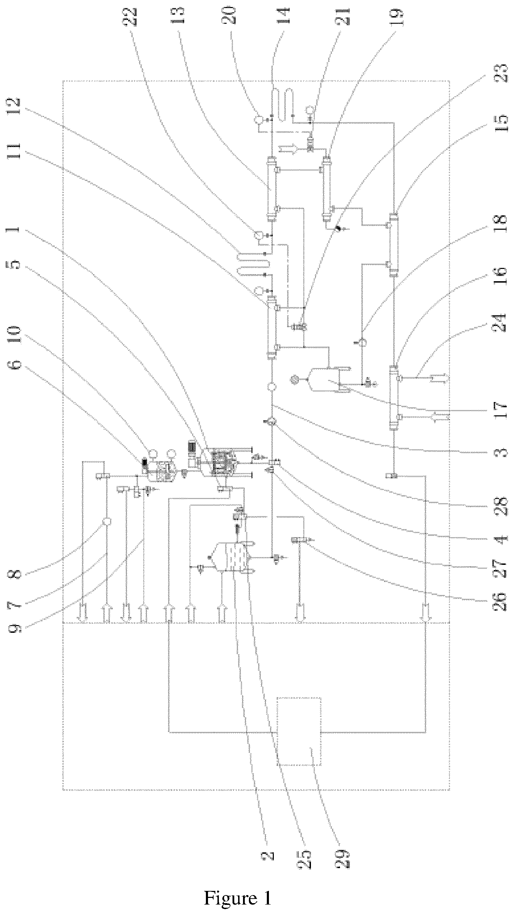

Figure 1 is a schematic structure diagram of a device of the present invention.
wherein, 1 - storage container; 2 - pure water container; 3 - discharge pipeline; 4 - first switch valve; 5 - second switch valve; 6 - batching container; 7 - liquid inlet pipeline; 8 - flow meter; 9 - granule inlet pipeline; 10 - liquid level sensor; 11 - preheating heat exchange pipe; 12 - preheating thermal insulation pipe; 13 - sterilization heat exchange pipe; 14 - sterilization thermal insulation pipe; 15 - cooling heat exchange pipe; 16 - outlet cooling pipe; 17 - hot water container; 18 - hot water outlet pipeline; 19 - steam heat exchange pipe; 20 - first temperature sensor; 21 - first controller; 22 - second temperature sensor; 23 - second controller; 24 - cooling water pipeline; 25 - discharge valve; 26 - recycle valve; 27 - water overhead valve; 28 - delivery pump; 29 - filling equipment.

### Detailed Description of Exemplary Embodiments

In the following, the technical solution of the present invention is further explained in detail combining with the accompanying drawings.

Referring to Figure 1, a preferred embodiment of a preparation and sterilization device for a granule-containing liquid beverage comprises a storage container 1, and a batching mechanism communicating with the storage container 1. The invention is defined by claim 1. The batching mechanism comprises a batching container 6 communicating with the storage container 1, a liquid inlet pipeline 7 communicating with the batching container 6, a flow meter 8 disposed on the liquid inlet pipeline 7, a granule inlet pipeline 9 communicating with the batching container 6, and a liquid level sensor 10 disposed in the batching container 6; the liquid level sensor 10 is used to determine whether the granules entering the batching container 6 raises the liquid level in the batching container 6 to a set height.

In the current embodiment, in the batching container 6, a liquid level when the liquid medium reaches 100 L is defined as the set liquid level, and in the granule-containing liquid beverage to be prepared, a volume ratio of the granules and the liquid is 3: 7. First, 70 L of liquid is introduced into the batching container 6, wherein the introduced amount of the liquid into the batching container 6 is measured by a flow meter 8, and then granules are introduced into the batching container 6 until the liquid level in the batching container 6 rises to the set liquid level. After receiving a liquid level signal fed back by the liquid level sensor 10, the introduction of the granules is stopped. The preparation method, which per se is outside the subject-matter of the claims, of combining the volume ratio and the liquid level, is easy to operate and control, and can save the expensive granule flow meter used during on-line granule addition in conventional device, and reduces the preparation cost of the granule-containing liquid beverage; and this preparation method can achieve the preparation of any different concentration of granule products.

The above preparation and sterilization device for a granule-containing liquid beverage further comprises a pure water container 2, a discharge pipeline 3 respectively communicating with the storage container 1 and the pure water container 2, and the medium in the discharge pipeline 3 successively flows into the heating mechanism, the sterilization mechanism and the cooling mechanism, and finally flows into a filling equipment 29 or flows back to the storage container 1 or the pure water container 2. The discharge pipeline 3 comprises a feed end, a discharge end, a first switch valve 4 disposed at the feed end and a second switch valve 5 disposed at the discharge end. The first switch valve 4 is used to communicate the pure water container 2 and the feed end or to communicate the storage container 1 and the feed end; and the second switch valve 5 is used to communicate the discharge end and the pure water container 2 or to communicate the discharge end and the storage container 1.

In the preferred embodiment of the present invention, a discharge valve 25 is provided between the second switch valve 5 and the pure water container 2, and the discharge valve 25 communicates with a recycle valve 26; and a water overhead valve 27 is provided between the first switch valve 4 and the pure water container 2.

In the present invention, the first switch valve 4 has a first communication state and a second communication state, and when the first switch valve 4 is switched to the first communication state, the pure water container 2 and the feed end are communicated, and the storage container 1 and the feed end are disconnected; when the first switch valve 4 is switched to the second communication state, the pure water container 2 and the feed end are disconnected, and the storage container 1 and the feed end are communicated; the second switch valve 5 has a third communication state and a fourth communication state, and when the second switch valve 5 is switched to the third communication state, the discharge end and the pure water container 2 are communicated, and the discharge end and the storage container 1 are disconnected; when the second switch valve 5 is switched to the fourth communication state, the discharge end and the storage container 1 are communicated, and the discharge end and the pure water container 2 are disconnected.

Through this configuration, when the system is not in filling process, the pure water circulates in the system to keep the system in the sterile state, and at this moment, the water overhead valve 27 is opened, the first switch valve 4 is switched to the first communication state, and the second switch valve 5 is switched to the third communication state; during filling process, the pure water does not enter the system, and the granule-containing liquid beverage enters the system, and at this moment, the water overhead valve 27 is closed, the first switch valve 4 is switched to the second communication state to let the granule-containing liquid beverage enter the filling equipment 29; when a fault occurs in the back-end filling equipment 29, the granule-containing liquid beverage in the system is required to flow back to the storage container 1, and the granule-containing liquid beverage is circulated and sterilized in the system, and at this moment, the first switch valve 4 keeps the second communication state, and the second switch valve 5 is switched to the fourth communication state; when the circulation and sterilization of the granule-containing liquid beverage in the system is up to a time limit, the water overhead valve 27 is first opened, then the first switch valve 4 is switched to the first communication state, and the second switch valve 5 is kept in the fourth communication state, such that the pure water pushes the granule-containing liquid beverage in the system into the storage container 1, and then the second switch valve 5 is switched to the third communication state such that the pure water enters the pure water container 2, the pure water is circulated in the system, and the diluted back-end residual material is discharged through the discharge valve 25, or may be recycled through the recycle valve 26 and re-prepared.

In UHT production process, the material-push-water and water-push-material processes before and after production are very common, but during the push material process, it should be ensured that the material in the storage container 1 will not be completely taken away by the delivery pump 28, otherwise risks such as destruction of the sterile condition of UHT caused by the pump evacuating will arise. Generally, an expert preparation engineer will set a minimum protection liquid level for the storage container 1, and once the liquid level is lower than this protection liquid level, the push liquid process begins, however, the protection liquid level set in the storage container 1 is usually part of the product mixture loss. By the above structure arrangement, in the water-push-material step, the material in the system can be pushed back to the storage container 1 by the pure water, avoiding the waste of the materials.

The heating mechanism comprises a preheating heat exchange pipe 11 and a preheating thermal insulation pipe 12 successively communicating with each other; the sterilization mechanism comprises a sterilization heat exchange pipe 13 and a sterilization thermal insulation pipe 14 successively communicating with each other; and the cooling mechanism comprises a cooling heat exchange pipe 15 and an outlet cooling pipe 16 successively communicating with each other. The discharge pipeline 3 successively passes through the preheating heat exchange pipe 11, the preheating thermal insulation pipe 12, the sterilization heat exchange pipe 13, the sterilization thermal insulation pipe 14, the cooling heat exchange pipe 15 and the outlet cooling pipe 16. The main problem for the sterilization of the granule-containing liquid beverage product is that the center temperature of the granules cannot reach the corresponding sterilization requirement, while the present invention adopts a stepped heating mode, and according to product features, sets different preheating heat exchange pipe 11 for preheating, such as of 110 °C, after the product reaches this temperature, it enters the preheating thermal insulation pipe 12, and after holding for a special duration such as 10 s, 20 s and 30 s, which is determined according to the heat-transfer characteristic of the product, an inlet temperature and an outlet temperature of the preheating thermal insulation pipe 12 are detected, a deviation valve of the inlet temperature and the outlet temperature are verified to adjust the temperature of the system, and the product enters the follow-up sterilization heat exchange pipe 13 and the sterilization thermal insulation pipe 14 to conduct the final temperature control and sterilization, in this way, it can effectively ensure that the center temperature of the product granules reaches the sterilization requirement, causing the sterilization more thorough.

The preparation and sterilization device for a granule-containing liquid beverage mentioned above further comprises a heat exchange mechanism, the heat exchange mechanism comprises a hot water container 17, a hot water outlet pipeline 18 communicating with the hot water container 17, and a steam heat exchange pipe 19, and the hot water outlet pipeline 18 successively passes through the cooling heat exchange pipe 15, the steam heat exchange pipe 19, and the sterilization heat exchange pipe 13, and then is divided into two parts to pass through the preheating heat exchange pipe 11 and enter the hot water container 17, respectively. By this arrangement, the low-temperature hot water in the hot water outlet pipeline 18 first exchanges heat with the product in the cooling heat exchange pipe 15 to heat up, then exchanges heat with the steam in the steam heat exchange pipe 19 to heat up, next exchanges heat with the product in the sterilization heat exchange pipe 13 to cool down, and then is divided into two parts, one exchanges heat with the product in the preheating heat exchange pipe 11 to cool down and the other directly enters the hot water container 17. Through this structure, the thermal energy of the product in the cooling heat exchange pipe 15 is recycled.

In the preferred embodiment of the present invention, the heat exchange mechanism further comprises a first temperature sensor 20 disposed at an outlet end of the sterilization heat exchange pipe 13, and a first controller 21 for controlling a steam flow entering the steam heat exchange pipe 19, the first temperature sensor 20 is used to send a first temperature signal to the first controller 21, and the first controller 21 is used to control the steam flow according to the first temperature signal. When the real-time temperature fed back by the first temperature signal is lower than a set temperature, the first controller 21 controls the steam flow to increase; and when the real-time temperature fed back by the first temperature signal is greater than the set temperature, the first controller 21 controls the steam flow to decrease.

The heat exchange mechanism further comprises a second temperature sensor 22 disposed at an outlet end of the preheating heat exchange pipe 12, and a second controller 23 for controlling a hot water flow entering the hot water container 17, the second temperature sensor 22 is used to send a second temperature signal to the second controller 23, and the second controller 23 is used to control the hot water flow according to the second temperature signal. When the real-time temperature fed back by the second temperature signal is lower than a set temperature, the second controller 23 controls the hot water flow directly entering the hot water container 17 to decrease, such that the flow of the hot water exchanging heat with the product in the preheating heat exchange pipe 11 increases; and when the real-time temperature fed back by the second temperature signal is greater than the set temperature, the second controller 23 controls the hot water flow directly entering the hot water container 17 to increase, such that the flow of the hot water exchanging heat with the product in the preheating heat exchange pipe 11 decreases.

The heat exchange mechanism further comprises a cooling water pipeline 24 for exchanging heat with the outlet cooling pipe 16, and through this arrangement, the product is finally cooled down and then fed into the filling equipment 29, and meanwhile, the heat in the product is further exchanged such that the heat is recycled.

The embodiments described above are only for illustrating the technical concepts and features of the present invention, and are intended to make those skilled in the art being able to understand the present invention and thereby implement it, and should not be concluded to limit the protective scope of this invention. The scope of protection is defined according to the appended claims.

## Claims

1. A preparation and sterilization device for a granule-containing liquid beverage, comprising a storage container (1), and a batching mechanism communicating with the storage container (1), wherein the batching mechanism comprises a batching container (6) communicating with the storage container (1), a liquid inlet pipeline (7) communicating with the batching container (6), a flow meter (8) disposed on the liquid inlet pipeline (7), a granule inlet pipeline (9) communicating with the batching container (6), and a liquid level sensor (10) disposed in the batching container (6) for determining whether the granules entering the batching container (6) raises the liquid level in the batching container (6) to a set height;
**characterized in that** the device further comprises a pure water container (2), a discharge pipeline (3) respectively communicating with the storage container (1) and the pure water container (2), a heating mechanism communicating with the discharge pipeline (3), a sterilization mechanism communicating with the discharge pipeline (3), and a cooling mechanism communicating with the discharge pipeline (3), where a medium in the discharge pipeline (3) successively flows into the heating mechanism, the sterilization mechanism and the cooling mechanism, and finally flows into a filling equipment or flows back to the storage container (1) or the pure water container (2), wherein the discharge pipeline (3) comprises:
a first switch valve (4) for communicating the pure water container (2) and a feed end of the discharge pipeline (3) or communicating the storage container (1) and a feed end of the discharge pipeline (3); and
a second switch valve (5) for communicating a discharge end of the discharge pipeline (3) and the pure water container (2) or communicating a discharge end of the discharge pipeline (3) and the storage container (1);
wherein the first switch valve (4) is disposed at the feed end and the second switch valve (5) is disposed at the discharge end.

2. The device according to claim 1, is **characterized in that**, the heating mechanism comprises a preheating heat exchange pipe (11) and a preheating thermal insulation pipe (12) successively communicating with each other; the sterilization mechanism comprises a sterilization heat exchange pipe (13) and a sterilization thermal insulation pipe (14) successively communicating with each other; and the cooling mechanism comprises a cooling heat exchange pipe (15) and an outlet cooling pipe (16) successively communicating with each other.

3. The device according to claim 2, is **characterized in that**, the device further comprises a heat exchange mechanism, the heat exchange mechanism comprises a hot water container (17), a hot water outlet pipeline (18) communicating with the hot water container (17), and a steam heat exchange pipe (19), and the hot water outlet pipeline (18) successively passes through the cooling heat exchange pipe (15), the steam heat exchange pipe (19), and the sterilization heat exchange pipe (13), and then is divided into two parts to pass through the preheating heat exchange pipe (11) and enter the hot water container (17), respectively.

4. The device according to claim 3, is **characterized in that**, the heat exchange mechanism further comprises a first temperature sensor (20) disposed at an outlet end of the sterilization heat exchange pipe (13), and a first controller (21) for controlling a steam flow entering the steam heat exchange pipe (19), the first temperature sensor (20) is used to send a first temperature signal to the first controller (21), and the first controller (21) is used to control the steam flow according to the first temperature signal.

5. The device according to claim 4, is **characterized in that**, the heat exchange mechanism further comprises a second temperature sensor (22) disposed at an outlet end of the preheating heat exchange pipe (11), and a second controller (23) for controlling a hot water flow entering the hot water container (17), the second temperature sensor (22) is used to send a second temperature signal to the second controller (23), and the second controller (23) is used to control the hot water flow according to the second temperature signal.

6. The device according to claim 3, is **characterized in that**, the heat exchange mechanism further comprises a cooling water pipeline (24) for exchanging heat with the outlet cooling pipe. (16)

7. The device according to any one of the preceding claims, is **characterized in that**, a discharge valve (25) is provided between the second switch valve (5) and the pure water container (2), and the discharge valve (25) communicates with a recycle valve (26).

8. The device according to any one of the preceding claims, is **characterized in that**, a water overhead valve (27) is provided between the first switch valve (4) and the pure water container (2).

## Patentansprüche

1. Eine Zubereitungs- und Sterilisationsvorrichtung für ein granulathaltiges flüssiges Getränk, beinhaltend einen Vorratsbehälter (1) und einen Dosiermechanismus, der mit dem Vorratsbehälter (1) in Verbindung steht, wobei der Dosiermechanismus Folgendes beinhaltet: einen Dosierbehälter (6), der mit dem Vorratsbehälter (1) in Verbindung steht, eine Flüssigkeitseinlassleitung (7), die mit dem Dosierbehälter (6) in Verbindung steht, einen Durchflußmesser (8), der an der Flüssigkeitseinlassleitung (7) angeordnet ist, eine Granulateinlassleitung (9), die mit dem Dosierbehälter (6) in Verbindung steht, und einen Flüssigkeitspegelsensor (10), der in dem Dosierbehälter (6) angeordnet ist, zum Bestimmen, ob die in den Dosierbehälter (6) eintretenden Granulate den Flüssigkeitspegel in dem Dosierbehälter (6) auf eine festgesetzte Höhe anheben; **dadurch gekennzeichnet, dass** die Vorrichtung ferner Folgendes beinhaltet: einen Reinwasserbehälter (2), eine Ablassleitung (3), die mit dem Vorratsbehälter (1) bzw. dem Reinwasserbehälter (2) in Verbindung steht, einen Erwärmungsmechanismus, der mit der Ablassleitung (3) in Verbindung steht, einen Sterilisationsmechanismus, der mit der Ablassleitung (3) in Verbindung steht, und einen Kühlmechanismus, der mit der Ablassleitung (3) in Verbindung steht, wobei ein Medium in der Ablassleitung (3) nacheinander in den Erwärmungsmechanismus, den Sterilisationsmechanismus und den Kühlmechanismus strömt und schließlich in eine Abfüllanlage strömt oder zurück in den Vorratsbehälter (1) oder den Reinwasserbehälter (2) strömt, wobei die Ablassleitung (3) Folgendes beinhaltet:
ein erstes Schaltventil (4) zum Verbinden des Reinwasserbehälters (2) und eines Zufuhrendes der Ablassleitung (3) oder Verbinden des Vorratsbehälters (1) und eines Zufuhrendes der Ablassleitung (3); und
ein zweites Schaltventil (5) zum Verbinden eines Ablassendes der Ablassleitung (3) und des Reinwasserbehälters (2) oder Verbinden eines Ablassendes der Ablassleitung (3) und des Vorratsbehälters (1);
wobei das erste Schaltventil (4) an dem Zufuhrende angeordnet ist und das zweite Schaltventil (5) an dem Ablassende angeordnet ist.

2. Vorrichtung gemäß Anspruch 1, **dadurch gekennzeichnet, dass** der Erwärmungsmechanismus ein Vorerwärmungswärmeaustauschrohr (11) und ein Vorerwärmungswärmeisolierungsrohr (12) beinhaltet, die nacheinander miteinander in Verbindung stehen; wobei der Sterilisationsmechanismus ein Sterilisationswärmeaustauschrohr (13) und ein Sterilisationswärmeisolierungsrohr (14) beinhaltet, die nacheinander miteinander in Verbindung stehen; und der Kühlmechanismus ein Kühlwärmeaustauschrohr (15) und ein Auslasskühlrohr (16) beinhaltet, die nacheinander miteinander in Verbindung stehen.

3. Vorrichtung gemäß Anspruch 2, **dadurch gekennzeichnet, dass** die Vorrichtung ferner einen Wärmetauschmechanismus beinhaltet, wobei der Wärmetauschmechanismus Folgendes beinhaltet: einen Heißwasserbehälter (17), eine Heißwasserauslassleitung (18), die mit dem Heißwasserbehälter (17) in Verbindung steht, und ein Dampfwärmeaustauschrohr (19), und wobei die Heißwasserauslassleitung (18) nacheinander durch das Kühlwärmeaustauschrohr (15), das Dampfwärmeaustauschrohr (19) und das Sterilisationswärmeaustauschrohr (13) führt und dann in zwei Teile geteilt wird, um durch das Vorerwärmungswärmeaustauschrohr (11) zu führen bzw. in den Heißwasserbehälter (17) einzutreten.

4. Vorrichtung gemäß Anspruch 3, **dadurch gekennzeichnet, dass** der Wärmetauschmechanismus ferner einen ersten Temperatursensor (20), der an einem Auslassende des Sterilisationswärmeaustauschrohrs (13) angeordnet ist, und eine erste Steuerung (21) zum Steuern eines in das Dampfwärmeaustauschrohr (19) eintretenden Dampfstroms beinhaltet, wobei der erste Temperatursensor (20) verwendet wird, um ein erstes Temperatursignal an die erste Steuerung (21) zu senden, und die erste Steuerung (21) verwendet wird, um den Dampfstrom gemäß dem ersten Temperatursignal zu steuern.

5. Vorrichtung gemäß Anspruch 4, **dadurch gekennzeichnet, dass** der Wärmetauschmechanismus ferner einen zweiten Temperatursensor (22), der an einem Auslassende des Vorerwärmungswärmeaustauschrohrs (11) angeordnet ist, und eine zweite Steuerung (23) zum Steuern eines in den Heißwasserbehälter (17) eintretenden Heißwasserstroms beinhaltet, wobei der zweite Temperatursensor (22) verwendet wird, um ein zweites Temperatursignal an die zweite Steuerung (23) zu senden, und die zweite Steuerung (23) verwendet wird, um den Heißwasserstrom gemäß dem zweiten Temperatursignal zu steuern.

6. Vorrichtung gemäß Anspruch 3, **dadurch gekennzeichnet, dass** der Wärmetauschmechanismus ferner eine Kühlwasserleitung (24) zum Austauschen von Wärme mit dem Auslasskühlrohr (16) beinhaltet.

7. Vorrichtung gemäß einem der vorhergehenden Ansprüche, **dadurch gekennzeichnet, dass** ein Ablassventil (25) zwischen dem zweiten Schaltventil (5) und dem Reinwasserbehälter (2) bereitgestellt ist und das Ablassventil (25) mit einem Rückführungsventil (26) in Verbindung steht.

8. Vorrichtung gemäß einem der vorhergehenden Ansprüche, **dadurch gekennzeichnet, dass** ein Wasser-Überkopfventil (27) zwischen dem ersten Schaltventil (4) und dem Reinwasserbehälter (2) bereitgestellt ist.

## Revendications

1. Un dispositif de préparation et de stérilisation destiné à une boisson liquide contenant des granules, comprenant un contenant de stockage (1), et un mécanisme de dosage communiquant avec le contenant de stockage (1), dans lequel le mécanisme de dosage comprend un contenant de dosage (6) communiquant avec le contenant de stockage (1), une conduite d'entrée de liquide (7) communiquant avec le contenant de dosage (6), un débitmètre (8) disposé sur la conduite d'entrée de liquide (7), une conduite d'entrée de granules (9) communiquant avec le contenant de dosage (6), et un détecteur de niveau de liquide (10) disposé dans le contenant de dosage (6) servant à déterminer si les granules entrant dans le contenant de dosage (6) élèvent le niveau de liquide dans le contenant de dosage (6) jusqu'à une hauteur définie ;
**caractérisé en ce que** le dispositif comprend en outre un contenant d'eau pure (2), une conduite d'évacuation (3) communiquant respectivement avec le contenant de stockage (1) et le contenant d'eau pure (2), un mécanisme de chauffage communiquant avec la conduite d'évacuation (3), un mécanisme de stérilisation communiquant avec la conduite d'évacuation (3), et un mécanisme de refroidissement communiquant avec la conduite d'évacuation (3), où un milieu dans la conduite d'évacuation (3) s'écoule successivement jusque dans le mécanisme de chauffage, le mécanisme de stérilisation et le mécanisme de refroidissement, et enfin s'écoule jusque dans un équipement de remplissage ou s'écoule pour revenir vers le contenant de stockage (1) ou le contenant d'eau pure (2), dans lequel la conduite d'évacuation (3) comprend :
une première vanne de commutation (4) servant à faire communiquer le contenant d'eau pure (2) et une extrémité d'alimentation de la conduite d'évacuation (3) ou à faire communiquer le contenant de stockage (1) et une extrémité d'alimentation de la conduite d'évacuation (3) ; et
une deuxième vanne de commutation (5) servant à faire communiquer une extrémité d'évacuation de la conduite d'évacuation (3) et le contenant d'eau pure (2) ou à faire communiquer une extrémité d'évacuation de la conduite d'évacuation (3) et le contenant de stockage (1) ;
dans lequel la première vanne de commutation (4) est disposée à l'extrémité d'alimentation et la deuxième vanne de commutation (5) est disposée à l'extrémité d'évacuation.

2. Le dispositif selon la revendication 1, **caractérisé en ce que** le mécanisme de chauffage comprend un tuyau de préchauffage à échange de chaleur (11) et un tuyau de préchauffage à isolation thermique (12) communiquant successivement l'un avec l'autre ; le mécanisme de stérilisation comprend un tuyau de stérilisation à échange de chaleur (13) et un tuyau de stérilisation à isolation thermique (14) communiquant successivement l'un avec l'autre ; et le mécanisme de refroidissement comprend un tuyau de refroidissement à échange de chaleur (15) et un tuyau de refroidissement de sortie (16) communiquant successivement l'un avec l'autre.

3. Le dispositif selon la revendication 2, **caractérisé en ce que** le dispositif comprend en outre un mécanisme d'échange de chaleur, le mécanisme d'échange de chaleur comprend un contenant d'eau chaude (17), une conduite de sortie d'eau chaude (18) communiquant avec le contenant d'eau chaude (17), et un tuyau de vapeur à échange de chaleur (19), et la conduite de sortie d'eau chaude (18) passe successivement par le tuyau de refroidissement à échange de chaleur (15), le tuyau de vapeur à échange de chaleur (19), et le tuyau de stérilisation à échange de chaleur (13), et ensuite est séparée en deux parties pour passer par le tuyau de préchauffage à échange de chaleur (11) et pour entrer dans le contenant d'eau chaude (17), respectivement.

4. Le dispositif selon la revendication 3, **caractérisé en ce que** le mécanisme d'échange de chaleur comprend en outre un premier détecteur de température (20) disposé à une extrémité de sortie du tuyau de stérilisation à échange de chaleur (13), et un premier régulateur (21) servant à réguler un écoulement de vapeur entrant dans le tuyau de vapeur à échange de chaleur (19), le premier détecteur de température (20) est utilisé pour envoyer un premier signal de température au premier régulateur (21), et le premier régulateur (21) est utilisé pour réguler l'écoulement de vapeur selon le premier signal de température.

5. Le dispositif selon la revendication 4, **caractérisé en ce que** le mécanisme d'échange de chaleur comprend en outre un deuxième détecteur de température (22) disposé à une extrémité de sortie du tuyau de préchauffage à échange de chaleur (11), et un deuxième régulateur (23) servant à réguler un écoulement d'eau chaude entrant dans le contenant d'eau chaude (17), le deuxième détecteur de température (22) est utilisé pour envoyer un deuxième signal de température au deuxième régulateur (23), et le deuxième régulateur (23) est utilisé pour réguler l'écoulement d'eau chaude selon le deuxième signal de température.

6. Le dispositif selon la revendication 3, **caractérisé en ce que** le mécanisme d'échange de chaleur comprend en outre une conduite d'eau de refroidissement (24) servant à échanger de la chaleur avec le tuyau de refroidissement de sortie (16).

7. Le dispositif selon l'une quelconque des revendications précédentes, **caractérisé en ce qu'**une vanne d'évacuation (25) est prévue entre la deuxième vanne de commutation (5) et le contenant d'eau pure (2), et **en ce que** la vanne d'évacuation (25) communique avec une vanne de recirculation (26).

8. Le dispositif selon l'une quelconque des revendications précédentes, **caractérisé en ce qu'**une vanne en tête d'eau (27) est prévue entre la première vanne de commutation (4) et le contenant d'eau pure (2).
